# EUROPEAN PATENT APPLICATION

(11) **EP 2 058 894 A1**
(43) Date of publication of application: **13.05.2009**
(21) Application number: 07829263.8
(22) Date of filing: 28.09.2007
(51) Int. Cl.: H01M 10/44, B60K 6/42, B60L 9/18, B60W 10/08, B60W 10/26, B60W 20/00, H01G 9/28, H01M 10/50, H02J 7/00

(54) **POWER SUPPLY DEVICE AND VEHICLE**

(30) Priority: 16.10.2006 JP 2006281534
(71) Applicant: Toyota Jidosha Kabushiki Kaisha, Toyota-shi Aichi 471-8571 (JP)
(72) Inventor: SOMA, Takaya, Toyota-shi Aichi 471-8571 (JP); MOGARI, Takeshi, Toyota-shi Aichi 471-8571 (JP)
(74) Representative: Kuhnen & Wacker
(86) International application number: PCT/JP2007/069525
(87) International publication number: WO 2008/047615

(57) **Abstract**

A power supply device mounted to a hybrid vehicle (100) includes: a capacitor (C1) that is chargeable/dischargeable; an electric power input/output unit (40) for inputting/outputting electric power between the capacitor (C1) and a charge/discharge device (50) installed external to the hybrid vehicle (100); a temperature sensor (21) detecting a temperature (Tc) of the capacitor (C1); and a control device (30) increasing the temperature of the capacitor (C1) by performing at least one of charging from the charge/discharge device (50) to the capacitor (C1) and discharging from the capacitor (C1) to the charge/discharge device (50) when the control device (30) determines based on a detection result of the temperature sensor (21) that the temperature of the capacitor (C1) is required to be increased. Thereby, the temperature of the capacitor (C1) can be increased without causing a load such as an inverter (14, 15) to consume electric power.

## Description

### Technical Field

The present invention relates to a power supply device and a vehicle. In particular, the present invention relates to a technique increasing the temperature of a power storage device included in a power supply device.

### Background Art

In recent years, considering environmental issues, attention has been paid to hybrid vehicles, electric vehicles, and the like. Such a vehicle is equipped with an electric motor as a motive power source, and equipped with a power storage device such as a secondary battery or a capacitor as an electric power source therefor.

Generally, in a power storage device such as a secondary battery or a capacitor, a decrease in temperature causes a reduction in capacity, and results in a deterioration in charge/discharge characteristics. Therefore, when the temperature of a power storage device decreases after start-up of a vehicle system in a vehicle as described above, it is necessary to increase the temperature of the power storage device immediately.

For example, Japanese Patent Laying-Open No. 2003-274565 discloses a power storage device heating a battery using heat generated inside the battery by repeatedly charging and discharging the battery. To increase the temperature of the battery, the power storage device can increase a current flowing through the battery and speed up the increase in the temperature of the battery.

The power storage device disclosed in Japanese Patent Laying-Open No. 2003-274565 performs charging/discharging between a capacitor and the battery when it increases the temperature of the battery. However, unless both the battery and the capacitor have enough states of charge, it is difficult to perform supply/reception of electric power between the battery and the capacitor. As a method for increasing the temperature of the battery in such a case, for example, a technique of causing a current to flow from the battery to a load is conceivable. However, since the load consumes electric power just to increase the temperature of the battery in this case, electric power stored in the battery is consumed wastefully.

### Disclosure of the Invention

One object of the present invention is to provide a power supply device capable of increasing a temperature of a power storage device to a temperature suitable for an operation of the power storage device, while promoting effective use of energy.

In summary, the present invention is directed to a power supply device mounted to a vehicle, including: a first power storage unit that is chargeable/dischargeable; an electric power input/output unit for inputting/outputting electric power between the first power storage unit and a charge/discharge device installed external to the vehicle; a detection unit detecting a temperature of the first power storage unit; and a temperature increase control unit increasing the temperature of the first power storage unit by performing at least one of charging from the charge/discharge device to the first power storage unit and discharging from the first power storage unit to the charge/discharge device when the temperature increase control unit determines based on a detection result of the detection unit that the temperature of the first power storage unit is required to be increased.

Preferably, the charge/discharge device includes a storing unit storing the electric power supplied/received to/from the first power storage unit, and a voltage conversion unit performing voltage conversion between the storing unit and the electric power input/output unit. The temperature increase control unit increases the temperature of the first power storage unit by controlling the voltage conversion unit such that a voltage of the electric power input/output unit is increased and causing a current to flow from the storing unit to the first power storage unit, and by controlling the voltage conversion unit such that the voltage of the electric power input/output unit is decreased and causing a current to flow from the first power storage unit to the storing unit.

More preferably, the charge/discharge device further includes an electric power conversion unit converting AC (alternating current) power from a commercial power supply into DC (direct current) power and supplying the DC power to the storing unit.

More preferably, the storing unit stores DC power supplied from an electric power generation device.

More preferably, the vehicle includes first and second rotating electric machines, first and second inverters provided corresponding to the first and second rotating electric machines, respectively, and a DC/AC conversion unit connected to the first and second rotating electric machines for converting DC power received from the electric power input/output unit into AC power and supplying the converted AC power to the first and second rotating electric machines. The temperature increase control unit controls the first and second inverters such that the AC power from the DC/AC conversion unit is converted into DC power and supplied to the first power storage unit.

Preferably, the power supply device further includes: a second power storage unit that is chargeable/dischargeable from/to the charge/discharge device via the electric power input/output unit; a first connection unit connecting the first power storage unit and the electric power input/output unit; and a second connection unit connecting the second power storage unit and the electric power input/output unit. The temperature increase control unit selects a power storage unit having a temperature to be increased from the first and second power storage units, and sets one of the first and second connection units that corresponds to the power storage unit having a temperature to be increased in a connected state.

Preferably, the temperature increase control unit calculates a temperature increase start time based on a temperature increase stop time input beforehand and a state of the first power storage unit, and starts increasing the temperature of the first power storage unit when a current time reaches the temperature increase start time.

According to another aspect of the present invention, the present invention is directed to a vehicle including a power supply device. The power supply device includes: a first power storage unit that is chargeable/dischargeable; an electric power input/output unit for inputting/outputting electric power between the first power storage unit and a charge/discharge device installed external to the vehicle; a detection unit detecting a temperature of the first power storage unit; and a temperature increase control unit increasing the temperature of the first power storage unit by performing at least one of charging from the charge/discharge device to the first power storage unit and discharging from the first power storage unit to the charge/discharge device when the temperature increase control unit determines based on a detection result of the detection unit that the temperature of the first power storage unit is required to be increased.

Preferably, the charge/discharge device has a storing unit storing the electric power supplied/received to/from the first power storage unit, and a voltage conversion unit performing voltage conversion between the storing unit and the electric power input/output unit. The temperature increase control unit increases the temperature of the first power storage unit by controlling the voltage conversion unit such that a voltage of the electric power input/output unit is increased and causing a current to flow from the storing unit to the first power storage unit, and by controlling the voltage conversion unit such that the voltage of the electric power input/output unit is decreased and causing a current to flow from the first power storage unit to the storing unit.

More preferably, the charge/discharge device further has an electric power conversion unit converting AC power from a commercial power supply into DC power and supplying the DC power to the storing unit.

More preferably, the storing unit stores DC power supplied from an electric power generation device.

More preferably, the vehicle further includes: first and second rotating electric machines; first and second inverters provided corresponding to the first and second rotating electric machines, respectively; and a DC/AC conversion unit connected to the first and second rotating electric machines for converting DC power received from the electric power input/output unit into AC power and supplying the converted AC power to the first and second rotating electric machines. The temperature increase control unit controls the first and second inverters such that the AC power from the DC/AC conversion unit is converted into DC power and supplied to the first power storage unit.

Preferably, the power supply device further includes a second power storage unit that is chargeable/dischargeable from/to the charge/discharge device via the electric power input/output unit, a first connection unit connecting the first power storage unit and the electric power input/output unit, and a second connection unit connecting the second power storage unit and the electric power input/output unit. The temperature increase control unit selects a power storage unit having a temperature to be increased from the first and second power storage units, and sets one of the first and second connection units that corresponds to the power storage unit having a temperature to be increased in a connected state.

Preferably, the temperature increase control unit calculates a temperature increase start time based on a temperature increase stop time input beforehand and a state of the first power storage unit, and starts increasing the temperature of the first power storage unit when a current time reaches the temperature increase start time.

Therefore, according to the present invention, it becomes possible to increase a temperature of a power storage device included in a power supply device to a temperature suitable for an operation of the power storage device, while promoting effective use of energy.

### Brief Description of the Drawings

Fig. 1 is a schematic block diagram of a hybrid vehicle 100 to which a power supply device in accordance with a first embodiment of the present invention is applied.
Fig. 2 is a functional block diagram of a control device 30 of Fig. 1.
Fig. 3 is a block diagram of an electric power storing device 58 of Fig. 1.
Fig. 4 is a view showing a path of a current flowing into the inside of hybrid vehicle 100 when electric power is supplied from a charge/discharge device 50 to hybrid vehicle 100.
Fig. 5 is a flow chart illustrating temperature increase control performed by control device 30 of Fig. 1.
Fig. 6 is a view showing a configuration of a modification of the first embodiment.
Fig. 7 is a functional block diagram of a control device 30A of Fig. 6.
Fig. 8 is a flow chart illustrating temperature increase control performed by control device 30A of Fig. 6.
Fig. 9 is a view showing a configuration of a charge/discharge device connected to a power supply device in accordance with a second embodiment of the present invention.
Fig. 10 is a view illustrating another exemplary connection configuration between the power supply device in accordance with the second embodiment and the charge/discharge device.
Fig. 11 is a view showing another exemplary configuration of the hybrid vehicle including the power supply device in accordance with the present embodiment.

### Best Modes for Carrying Out the Invention

Hereinafter, embodiments of the present invention will be described in detail with reference to the drawings, in which identical or corresponding parts will be designated by the same reference numerals, and the description thereof will not be repeated.

### [First Embodiment]

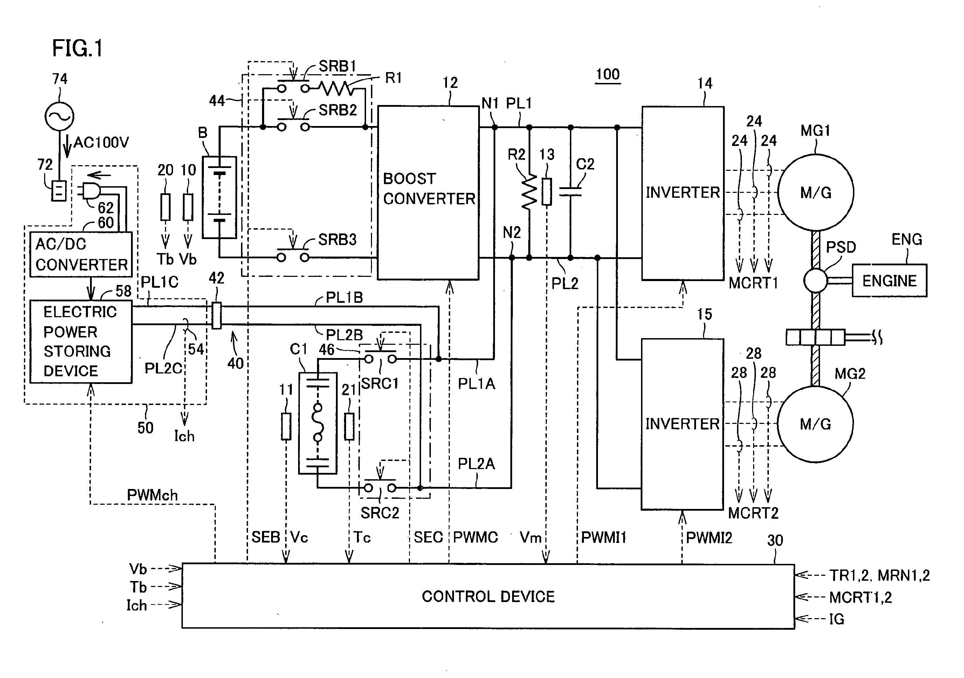

Fig. 1 is a schematic block diagram of a hybrid vehicle 100 to which a power supply device in accordance with a first embodiment of the present invention is applied.

Referring to Fig. 1, hybrid vehicle 100 includes a battery B, a boost converter 12, a capacitor C1, a capacitor C2, inverters 14 and 15, voltage sensors 10, 11, and 13, current sensors 24 and 28, temperature sensors 20 and 21, connection units 44 and 46, a resistor R2, and a control device 30.

An engine ENG generates drive force using combustion energy of a fuel such as gasoline as a source. The drive force generated by engine ENG is split by a power split device PSD into two paths, as indicated by thick diagonal lines in Fig. 1. One is a path transmitting the split drive force to a drive shaft driving wheels via a reduction gear not shown, and the other is a path transmitting the split drive force to a motor generator MG1.

While motor generators MG1 and MG2 can serve both as an electric power generator and as an electric motor, motor generator MG1 mainly operates as an electric power generator, and motor generator MG2 mainly operates as an electric motor, as described below.

Specifically, motor generator MG1 is a three-phase AC rotating machine, and used as a starter starting engine ENG at the time of acceleration. On this occasion, motor generator MG1 receives electric power supply from battery B and/or capacitor C1 and is driven as an electric motor, and cranks and starts engine ENG.

Further, after engine ENG is started, motor generator MG1 is rotated by the drive force of engine ENG transmitted via power split device PSD, and generates electric power.

The electric power generated by motor generator MG1 is used for different purposes, depending on a running state of the vehicle, stored energy in capacitor C1, and the amount of charge in battery B. For example, at the time of normal running and abrupt acceleration, the electric power generated by motor generator MG1 is directly used as electric power for driving motor generator MG2. In contrast, when the amount of charge in battery B or the stored energy in capacitor C1 is lower than a prescribed value, the electric power generated by motor generator MG1 is converted from AC power into DC power by inverter 14, and stored in battery B or capacitor C1.

Motor generator MG2 is a three-phase AC rotating machine, and driven by at least either one of the electric power stored in battery B and capacitor C1 and the electric power generated by motor generator MG1. Drive force of motor generator MG2 is transmitted to the drive shaft of the wheels via the reduction gear. Thereby, motor generator MG2 assists engine ENG to cause the vehicle to run, or causes the vehicle to run only by its own drive force.

Further, at the time of regenerative braking of the vehicle, motor generator MG2 is rotated by the wheels via the reduction gear and operates as an electric power generator. On this occasion, regenerative electric power generated by motor generator MG2 is charged in battery B and capacitor C1 via inverter 15.

Battery B is a secondary battery such as a nickel hydride battery or a lithium ion battery. Battery B may also be a fuel battery. Voltage sensor 10 detects a DC voltage Vb output from battery B, and outputs the detected DC voltage Vb to control device 30. Temperature sensor 20 detects a temperature Tb of battery B (hereinafter also referred to as a battery temperature Tb), and outputs the detected battery temperature Tb to control device 30.

Connection unit 44 includes system relays SRB1-SRB3 and a resistor R1. System relay SRB1 and resistor R1 are connected in series between a positive electrode of battery B and boost converter 12. System relay SRB2 is connected between the positive electrode of battery B and boost converter 12, in parallel with system relay SRB1 and resistor R1. System relay SRB3 is connected between a negative electrode of battery B and boost converter 12.

System relays SRB1-SRB3 are turned on/off by a signal SEB from control device 30. More specifically, system relays SRB1-SRB3 are turned on by signal SEB at an H (logical high) level from control device 30, and turned off by signal SEB at an L (logical low) level from control device 30.

Boost converter 12 boosts DC voltage Vb supplied from battery B to a boost voltage having an arbitrary level, and supplies the boost voltage to capacitor C2. More specifically, upon receiving a control signal PWMC from control device 30, boost converter 12 supplies DC voltage Vb boosted in response to control signal PWMC to capacitor C2. Further, upon receiving control signal PWMC from control device 30, boost converter 12 lowers a DC voltage supplied from inverter 14 and/or inverter 15 via capacitor C2, and charges battery B.

Capacitor C1 is connected to a power supply line PL1 and to an earth line PL2 in parallel with battery B. Capacitor C1 includes, for example, a plurality of capacitor devices connected in series. The plurality of capacitor devices are composed, for example, of electric double layer capacitors.

Voltage sensor 11 detects a voltage Vc between both ends of capacitor C1 (hereinafter also referred to as an inter-terminal voltage), and outputs the detected voltage Vc to control device 30. Temperature sensor 21 detects a temperature Tc of capacitor C1 (hereinafter also referred to as a capacitor temperature Tc), and outputs the detected capacitor temperature Tc to control device 30.

Connection unit 46 includes system relays SRC1 and SRC2. System relay SRC1 is connected between a power supply line PL1A and a positive electrode of capacitor C1. System relay SRC2 is connected between an earth line PL2A and a negative electrode of capacitor C1. Power supply line PL1A is connected with power supply line PL1 at a node N1. Earth line PL2A is connected with earth line PL2 at a node N2.

System relays SRC1 and SRC2 are turned on/off by a signal SEC from control device 30. More specifically, system relays SRC1 and SRC2 are turned on by signal SEC at an H level from control device 30, and turned off by signal SEC at an L level from control device 30.

Capacitor C2 smoothes the DC voltage boosted by boost converter 12, and supplies the smoothed DC voltage to inverters 14 and 15. Voltage sensor 13 detects a voltage Vm between both ends of capacitor C2 (equivalent to an input voltage of inverters 14 and 15), and outputs the detected voltage Vm to control device 30.

Resistor R2 is connected between power supply line PL1 and earth line PL2. Resistor R2 is provided to consume electric charge remaining in capacitor C2 after an electric power conversion operation by hybrid vehicle 100 is stopped.

Upon receiving the DC voltage from boost converter 12 or capacitor C1 via capacitor C2, inverter 14 converts the DC voltage into a three-phase AC voltage based on a control signal PWMI1 from control device 30, and drives motor generator MG1. Thereby, motor generator MG1 is driven to generate a torque designated by a torque command value TR1.

Further, at the time of regenerative braking of hybrid vehicle 100, inverter 14 converts an AC voltage generated by motor generator MG1 into a DC voltage based on control signal PWMI1 from control device 30, and supplies the converted DC voltage to capacitor C1 or boost converter 12 via capacitor C2. The regenerative braking referred to herein includes braking with regeneration through a foot brake operation by a driver of hybrid vehicle 100, and deceleration (or stopping acceleration) of the vehicle while regenerating power by releasing an accelerator pedal during running without operating the foot brake.

Upon receiving the DC voltage from boost converter 12 or capacitor C1 via capacitor C2, inverter 15 converts the DC voltage into an AC voltage based on a control signal PWMI2 from control device 30, and drives motor generator MG2. Thereby, motor generator MG2 is driven to generate a torque designated by a torque command value TR2.

Further, at the time of regenerative braking of hybrid vehicle 100, inverter 15 converts an AC voltage generated by motor generator MG2 into a DC voltage based on control signal PWMI2 from control device 30, and supplies the converted DC voltage to capacitor C1 or boost converter 12 via capacitor C2.

Current sensor 24 detects a motor current MCRT1 flowing into motor generator MG1, and outputs the detected motor current MCRT1 to control device 30. Current sensor 28 detects a motor current MCRT2 flowing into motor generator MG2, and outputs the detected motor current MCRT2 to control device 30.

Control device 30 receives torque command values TR1 and TR2 and motor rotation numbers MRN1 and MRN2 from an external electronic control unit (ECU) not shown, and receives a signal IG for giving an instruction to start up hybrid vehicle 100.

Further, control device 30 receives DC voltage Vb from voltage sensor 10, inter-terminal voltage Vc of capacitor C1 from voltage sensor 11, voltage Vm from voltage sensor 13, motor current MCRT1 from current sensor 24, and motor current MCRT2 from current sensor 28.

Based on voltage Vm input to inverter 14, torque command value TR1, and motor current MCRT1, control device 30 generates control signal PWMI1 for controlling switching of an IGBT element (not shown) of inverter 14 when inverter 14 drives motor generator MG1, and outputs the generated control signal PWMI1 to inverter 14.

Further, based on voltage Vm input to inverter 15, torque command value TR2, and motor current MCRT2, control device 30 generates control signal PWMI2 for controlling switching of an IGBT element (not shown) of inverter 15 when inverter 15 drives motor generator MG2, and outputs the generated control signal PWMI2 to inverter 15.

In addition, when inverter 14 drives motor generator MG1, control device 30 generates control signal PWMC for controlling switching of an IGBT element (not shown) of boost converter 12, based on DC voltage Vb of battery B, voltage Vm input to inverter 14, torque command value TR1, and motor rotation number MRN1, and outputs the generated control signal PWMC to boost converter 12.

Further, when inverter 15 drives motor generator MG2, control device 30 generates control signal PWMC for controlling switching of the IGBT element (not shown) of boost converter 12, based on DC voltage Vb of battery B, voltage Vm input to inverter 15, torque command value TR2, and motor rotation number MRN2, and outputs the generated control signal PWMC to boost converter 12.

In addition, at the time of regenerative braking of hybrid vehicle 100, control device 30 generates control signal PWMI2 for converting the AC voltage generated by motor generator MG2 into a DC voltage, based on voltage Vm input to inverter 15, torque command value TR2, and motor current MCRT2, and outputs the generated control signal PWMI2 to inverter 15.

As described above, hybrid vehicle 100 uses electric power stored in capacitor C1, in addition to electric power stored in battery B, as electric power required when motor generators MG1 and MG2 are driven in a power running mode. Further, hybrid vehicle 100 stores electric power generated when motor generators MG1 and MG2 are driven in a regenerative mode in battery B and capacitor C1. In particular, by employing large-capacity electric double layer capacitors as capacitors constituting capacitor C1, electric power can be quickly supplied to motor generators MG1 and MG2, and response when a motor is driven can be enhanced. As a result, running performance of the vehicle can be ensured.

Hybrid vehicle 100 further includes an electric power input/output unit 40. Electric power input/output unit 40 includes a connector 42, a power supply line PL1B, and an earth line PL2B.

A charge/discharge device 50 is connected to connector 42. One end and the other end of power supply line PL1B are connected to power supply line PL1A and connector 42, respectively. One end and the other end of earth line PL2B are connected to earth line PL2A and connector 42, respectively.

Charge/discharge device 50 includes a power supply line PL1C, an earth line PL2C, a current sensor 54, an electric power storing device 58, an AC/DC converter 60, and a plug 62.

One end of power supply line PL1C is connected to power supply line PL1B via connector 42, and the other end of power supply line PL1C is connected to electric power storing device 58. One end of earth line PL2C is connected to earth line PL2B via connector 42, and the other end of earth line PL2C is connected to electric power storing device 58.

Current sensor 54 detects a current flowing into earth line PL2B, and outputs the detected current Ich to control device 30. Control device 30 varies a control signal PWMch according to current Ich. For example, charge/discharge device 50 and hybrid vehicle 100 each have two signal lines connecting current sensor 54 and control device 30 when charge/discharge device 50 is connected to connector 42. Thereby, control device 30 can obtain information on current Ich from current sensor 54.

When plug 62 is connected to a socket 72, AC/DC converter 60 converts an AC voltage (for example, AC 100V) from a commercial power supply 74 into a DC voltage, and supplies the DC voltage to electric power storing device 58. Electric power storing device 58 stores DC power supplied from AC/DC converter 60.

Further, electric power storing device 58 varies a voltage between power supply line PL1C and earth line PL2C according to control signal PWMch. Thereby, electric power storing device 58 uses the electric power stored therein to charge battery B and capacitor C1, or stores the electric power from battery B and capacitor C 1 therein.

That is, electric power storing device 58 and capacitor C1 perform charging/discharging alternately. Similarly, electric power storing device 58 and battery B perform charging/discharging alternately. A current associated with the charging/discharging flows into battery B and capacitor C1. Thereby, heat is generated inside battery B and inside capacitor C1. Thus, the temperature of battery B and the temperature of capacitor C1 can be increased.

When control device 30 detects that charge/discharge device 50 is connected to connector 42, control device 30 controls system relays SRB2, SRB3, SRC1, and SRC2, and controls electric power storing device 58. When battery B and electric power storing device 58 perform charging/discharging alternately, control device 30 further controls boost converter 12.

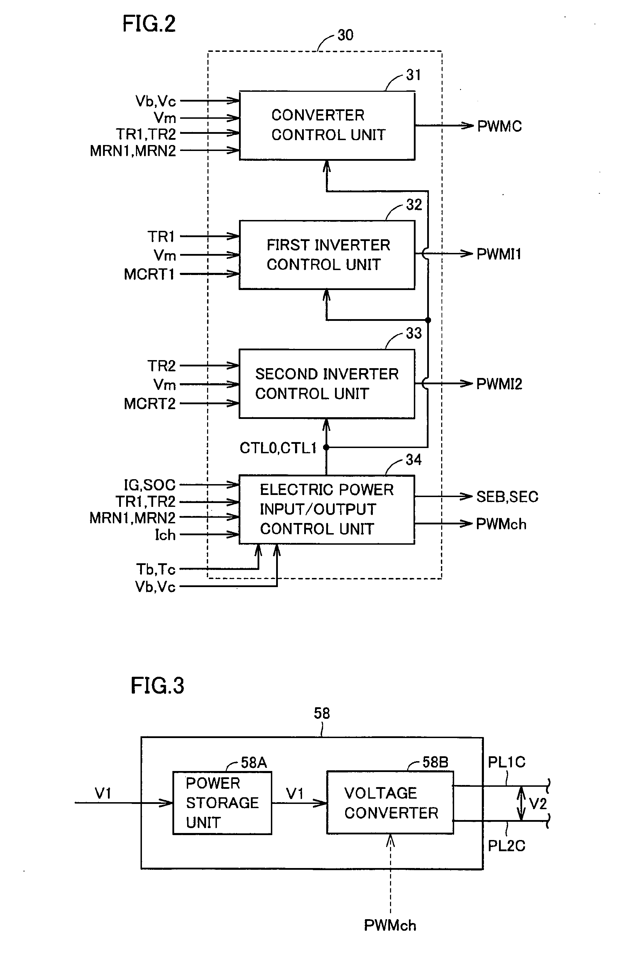

Fig. 2 is a functional block diagram of control device 30 of Fig. 1.

Referring to Figs. 2 and 1, control device 30 includes a converter control unit 31, a first inverter control unit 32, a second inverter control unit 33, and an electric power input/output control unit 34. Converter control unit 31 generates control signal PWMC for controlling boost converter 12 based on DC voltage Vb of battery B, inter-terminal voltage Vc of capacitor C1, voltage Vm, torque command values TR1 and TR2, and motor rotation numbers MRN1 and MRN2.

The first inverter control unit 32 generates control signal PWMI1 based on torque command value TR1 and motor current MCRT1 of motor generator MG1 and voltage Vm. The second inverter control unit 33 generates control signal PWMI2 based on torque command value TR2 and motor current MCRT2 of motor generator MG2 and voltage Vm.

Electric power input/output control unit 34 determines drive states of motor generators MG1 and MG2 based on torque command values TR1 and TR2 and motor rotation numbers MRN1 and MRN2, and determines whether hybrid vehicle 100 is started up or stopped, based on signal IG. Signal IG at an H level is a signal meaning that hybrid vehicle 100 is started up, and signal IG at an L level is a signal meaning that hybrid vehicle 100 is stopped.

Hereinafter, a state in which signal IG is at an L level will be referred to as "signal IG is in an OFF state", and a state in which signal IG is at an H level will be referred to as "signal IG is in an ON state".

In a case where the drive states of motor generators MG1 and MG2 are in stopped states and signal IG indicates that hybrid vehicle 100 is stopped, electric power input/output control unit 34 performs a temperature increase control process if either one of temperatures Tb and Tc is lower than a defined value. In this case, electric power input/output control unit 34 outputs signals SEB and SEC, and outputs control signal PWMch based on current Ich.

On the other hand, in a case where the drive states of motor generators MG1 and MG2 are in operated states or signal IG indicates that the hybrid vehicle is being operated, and in a case where both DC voltage Vb of battery B and inter-terminal voltage Vc of capacitor C1 are higher than a prescribed level, electric power input/output control unit 34 does not perform a charging operation. In these cases, electric power input/output control unit 34 generates a control signal CTL0, and causes boost converter 12 and inverters 14 and 15 to perform a normal operation that is performed to operate the vehicle.

Fig. 3 is a block diagram of electric power storing device 58 of Fig. 1.

Referring to Fig. 3, electric power storing device 58 includes a power storage unit 58A and a voltage converter 58B. Power storage unit 58A is charged by receiving a voltage V1 (DC voltage) output from AC/DC converter 60.

Voltage converter 58B converts voltage V1 input from power storage unit 58A, and outputs a voltage V2. Voltage converter 58B increases and decreases voltage V2 based on control signal PWMch from control device 30 shown in Fig. 1.

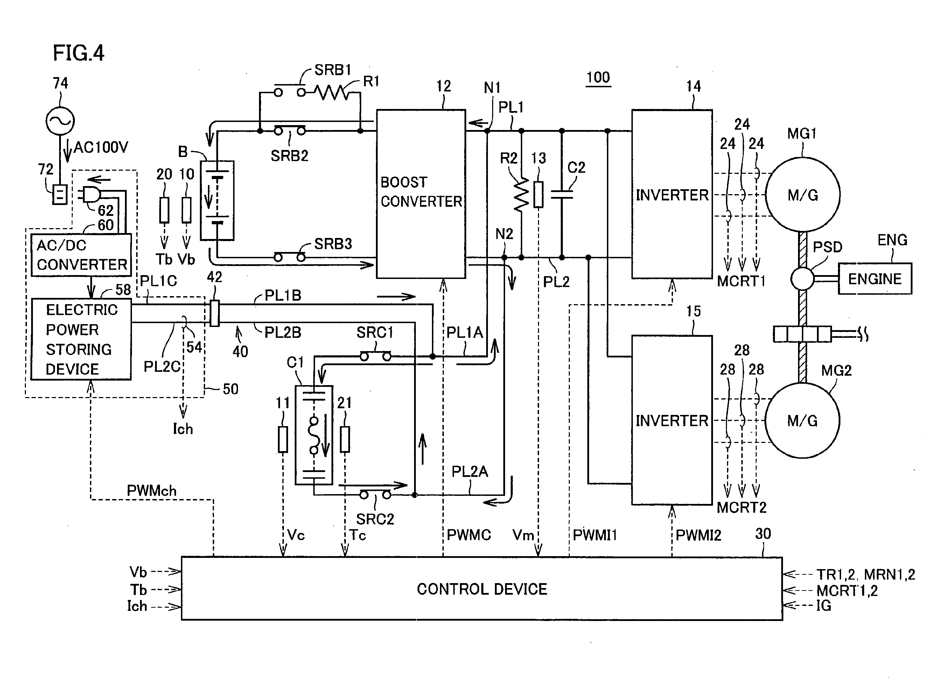

Fig. 4 is a view showing a path of a current flowing into the inside of hybrid vehicle 100 when electric power is supplied from charge/discharge device 50 to hybrid vehicle 100.

Referring to Fig. 4, in power supply line PL1B, a current flows from charge/discharge device 50 toward hybrid vehicle 100. In power supply line PL1A, the current flowing through power supply line PL1B is split into a current flowing into capacitor C1 and a current flowing into battery B. However, it is possible to cause the current to flow into only one of capacitor C1 and battery B by control device 30 controlling system main relays SRB2, SRB3, SRC1, and SRC2.

A current flowing through power supply line PL1A and system relay SRC1 is input to capacitor C1 and flows through the inside of capacitor C1. The current output from the negative electrode of capacitor C 1 flows through system relay SRC2 and earth line PL2B in order, and returns to electric power storing device 58.

On the other hand, a current flowing through power supply line PL1A and power supply line PL1 is input to boost converter 12, system relay SRB2, and the positive electrode of battery B in order. The current flowing through the inside of battery B is output from the negative electrode of battery B. The current from the negative electrode of battery B passes through system relay SRB3 and boost converter 12, and is input to earth line PL2. The current input to earth line PL2 flows through earth lines PL2A and PL2B in order, and returns to electric power storing device 58.

When electric power is supplied from hybrid vehicle 100 to charge/discharge device 50, the direction in which the current flows is opposite to the direction indicated by arrows shown in Fig. 4.

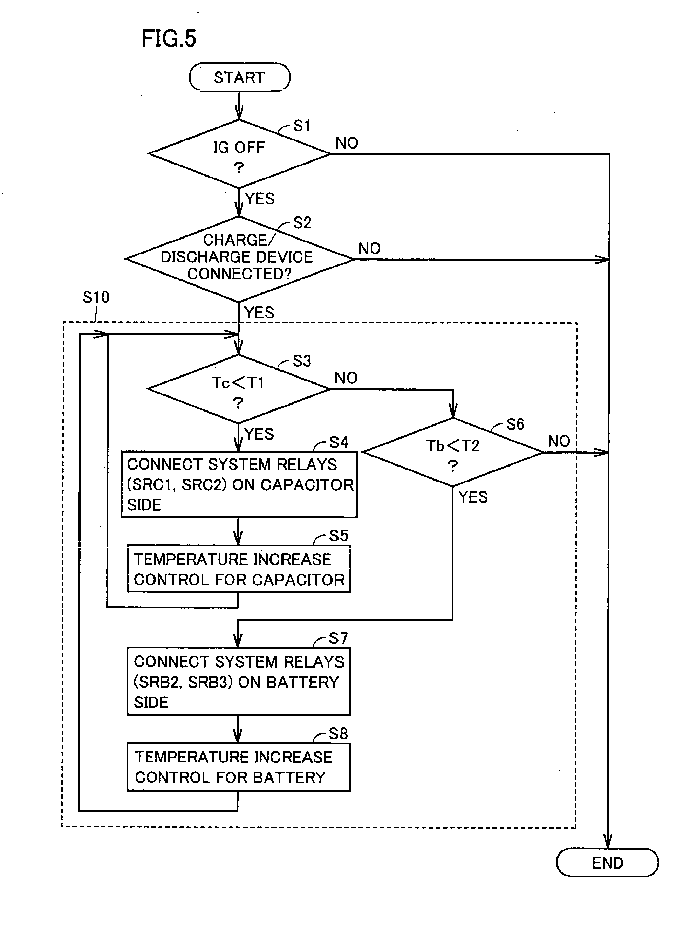

Fig. 5 is a flow chart illustrating temperature increase control performed by control device 30 of Fig. 1. The process of the flow chart is invoked from a prescribed main routine and performed at regular time intervals or every time when a prescribed condition is satisfied.

Referring to Figs. 5 and 1, when the process is started, control device 30 determines whether or not signal IG is in an OFF state (step S1). When signal IG is in an OFF state (YES in step S1), control device 30 determines whether or not charge/discharge device 50 is connected (step S2).

When signal IG is in an ON state (NO in step S1), control device 30 does not perform the temperature increase control process. In this case, the entire process is finished.

When charge/discharge device 50 is connected in step S2 (YES in step S2), control device 30 determines in step S3 whether or not temperature Tc of capacitor C1 is higher than a threshold value T1. When charge/discharge device 50 is not connected in step S2 (NO in step S2), control device 30 does not perform the temperature increase control process. In this case, the entire process is finished.

Whether or not charge/discharge device 50 is connected may be determined, for example, by providing a detection switch to connector 42 and determining the connection based on whether the switch is turned on or off, or may be determined based on whether or not a signal from current sensor 54 (information on current Ich) is input to control device 30.

When control device 30 determines that temperature Tc is lower than threshold value T1 (YES in step S3), control device 30 performs the process of step S4. On the other hand, when control device 30 determines that temperature Tc is not less than threshold value T1 (NO in step S3), control device 30 performs the process of step S6.

In step S4, control device 30 outputs signal SEC, and connects the system relays (SRC1, SRC2) on a capacitor C1 (capacitor) side. Next, in step S5, control device 30 outputs control signal PWMch, and varies the output voltage of electric power storing device 58 (voltage V2 shown in Fig. 3). Thereby, control device 30 performs the temperature increase control for capacitor C1.

Now referring to Figs. 1 and 3, when control device 30 controls voltage converter 58B to increase voltage V2, a current flows from power storage unit 58A to power supply line PL1C. Thereby, capacitor C1 is charged. Next, control device 30 controls voltage converter 58B to decrease voltage V2. On this occasion, a current flows from power supply line PL1C to power storage unit 58A. Thereby, capacitor C1 is discharged. Heat is generated inside capacitor C1 by the charging and discharging of capacitor C1. Thereby, the temperature of capacitor C1 is increased.

When the charging and discharging of capacitor C1 are performed prescribed times (it may be performed once or a plurality of times) in step S5, the process of step S3 is performed again.

On the other hand, in step S6, control device 30 determines whether or not temperature Tb of battery B is higher than a threshold value T2. When control device 30 determines that temperature Tb is lower than threshold value T2 (YES in step S6), control device 30 performs the process of step S7.

In step S7, control device 30 outputs signal SEB, and connects the system relays (SRB2, SRB3) on a battery B side. Next, in step S8, control device 30 performs the temperature increase control for battery B. The temperature increase control process in step S8 is the same as the temperature increase process in step S5. However, control device 30 may perform charging and discharging of battery B by controlling boost converter 12 (i.e. varying voltage Vm) instead of voltage converter 58B of Fig. 3.

When the charging and discharging of battery B are performed prescribed times in step S8, the process of step S3 is performed again.

When temperature Tb is determined to be not less than threshold value T2 in step S6 (NO in step S6), the temperature increase control process is finished.

The power supply device for a vehicle of the present embodiment described above will be comprehensively described below. The power supply device mounted to hybrid vehicle 100 includes: capacitor C1 that is chargeable/dischargeable; electric power input/output unit 40 for inputting/outputting electric power between capacitor C 1 and charge/discharge device 50 installed external to hybrid vehicle 100; temperature sensor 21 detecting temperature Tc of capacitor C1; and control device 30 increasing the temperature of capacitor C1 by performing at least one of charging from charge/discharge device 50 to capacitor C1 and discharging from capacitor C1 to charge/discharge device 50 when control device 30 determines based on a detection result of temperature sensor 21 (temperature Tc) that the temperature of capacitor C1 is required to be increased.

According to the present embodiment, the temperatures of battery B and capacitor C1 can be increased by supplying and receiving electric power between power storage devices (battery B and capacitor C1) provided to hybrid vehicle 100 and the external charge/discharge device. Thereby, even when all of a plurality of power storage devices provided to hybrid vehicle 100 are fully charged, the temperatures of the plurality of power storage devices can be increased without causing a load such as inverters 14 and 15 to consume electric power (i.e., without wastefully reducing the electric power stored in battery B and capacitor C1).

Preferably, charge/discharge device 50 includes power storage unit 58A storing the electric power supplied/received to/from capacitor C1, and voltage converter 58B performing voltage conversion between power storage unit 58A and electric power input/output unit 40. Control device 3 0 increases the temperature of capacitor C1 by controlling voltage converter 58B such that voltage V2 of electric power input/output unit 40 is increased and causing a current to flow from power storage unit 58A to capacitor C1, and by controlling voltage converter 58B such that voltage V2 of electric power input/output unit 40 is decreased and causing a current to flow from capacitor C 1 to power storage unit 58A. More preferably, charge/discharge device 50 further includes AC/DC converter 60 converting AC power from commercial power supply 74 into DC power and supplying the DC power to power storage unit 58A.

Since there is no need to limit the capacity of an external electric power storing device (power storage unit) in particular, a large capacity power storage device can be used as an external electric power storing device. The temperature increase control described above can easily be achieved by preparing a power storage device having a capacity larger than that of the power storage device mounted to hybrid vehicle 100.

It is to be noted that, in the above description, battery B and capacitor C1 may be interchanged, and temperature sensor 21 may be replaced with temperature sensor 20. In this case, an effect similar to the effect described above can be achieved for battery B.

Preferably, the power supply device further includes: battery B that is mutually chargeable/dischargeable from/to charge/discharge device 50 via electric power input/output unit 40; connection unit 46 connecting capacitor C1 and electric power input/output unit 40; and connection unit 44 connecting capacitor C1 and electric power input/output unit 40. Control device 30 selects a power storage device having a temperature to be increased from capacitor C1 and battery B, and sets one of connection units 44 and 46 that corresponds to the power storage device having a temperature to be increased in a connected state. Thereby, of the plurality of power storage devices, only a power storage device that requires an increase in temperature can have an increased temperature.

### [Modification]

According to the flow chart of Fig. 5, as soon as charge/discharge device 50 is connected to hybrid vehicle 100, the temperatures of the battery and the capacitor are started to be increased. However, for example, there may be a case where hybrid vehicle 100 is charged overnight. In this case, even if the temperatures of the battery and the capacitor are increased once, the battery and the power storage device may be cooled down as hybrid vehicle 100 is in a stopped state. That is, in the case described above, since the temperature increase control process is repeated a plurality of times with hybrid vehicle 100 in a stopped state, electric power from a commercial power supply may be consumed wastefully. Such a problem can be solved according to a modification described below.

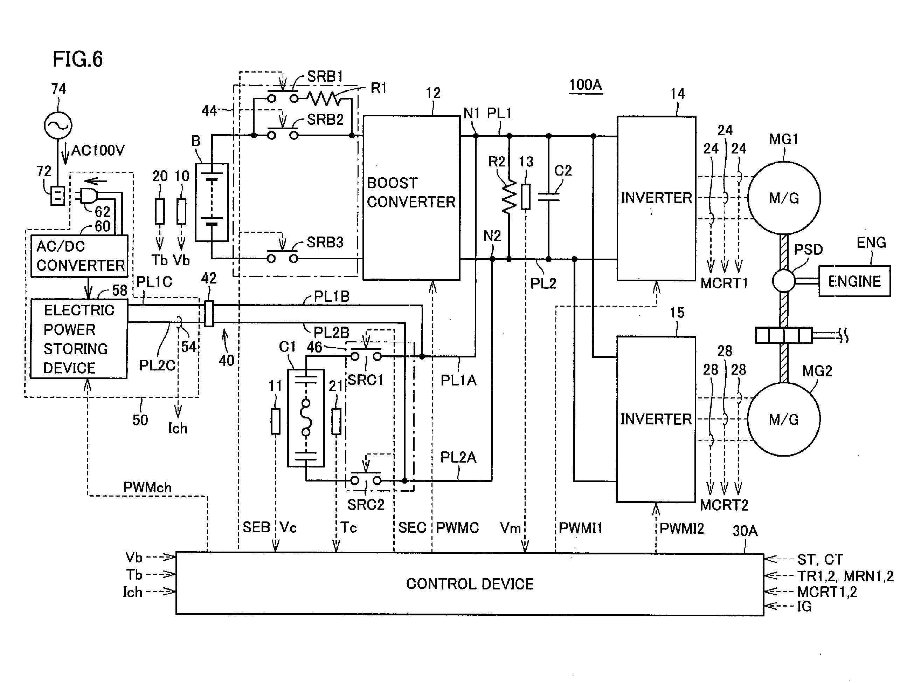

Fig. 6 is a view showing a configuration of a modification of the first embodiment.

Referring to Figs. 6 and 1, a hybrid vehicle 100A is different from hybrid vehicle 100 in that hybrid vehicle 100A includes a control device 30A instead of control device 30.

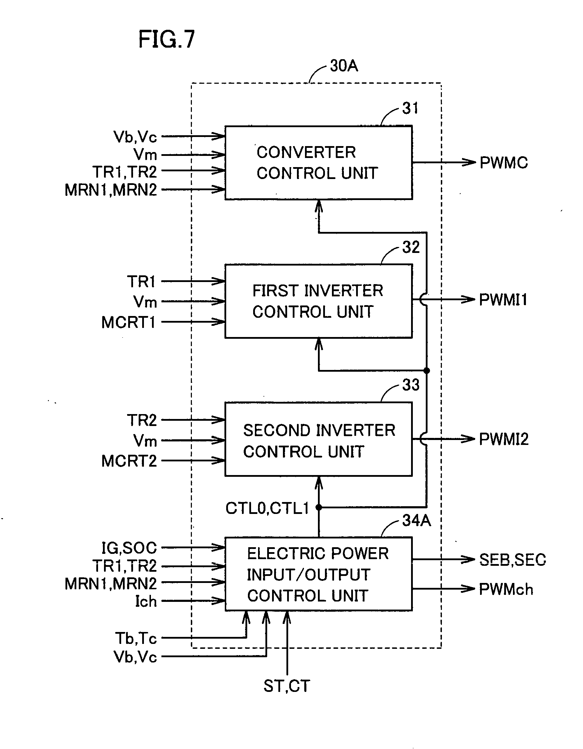

Fig. 7 is a functional block diagram of control device 30A of Fig. 6.

Referring to Figs. 7 and 2, control device 30A is different from control device 30 in that control device 30A includes an electric power input/output control unit 34A instead of electric power input/output control unit 34.

Referring to Figs. 6 and 7, a set time ST set by an operator as a time scheduled to start up the hybrid vehicle and a current time CT are input to control device 30A. Control device 30A may also have a clock therein. In this case, current time CT is information generated inside control device 30A.

Electric power input/output control unit 34A calculates a period of time required for the temperature increase control based on battery temperature Tb and/or capacitor temperature Tc. A time rate of change of battery temperature Tb when a prescribed current flows into battery temperature Tb, and a time rate of change of capacitor temperature Tc when a prescribed current flows into capacitor C1 are determined beforehand.

Electric power input/output control unit 34A compares a temperature increase start time determined based on set time ST and the period of time required for the temperature increase control, with current time CT. When current time CT reaches the temperature increase start time, electric power input/output control unit 34A outputs signals such as SEB, SEC, and PWMch to perform the temperature increase control process.

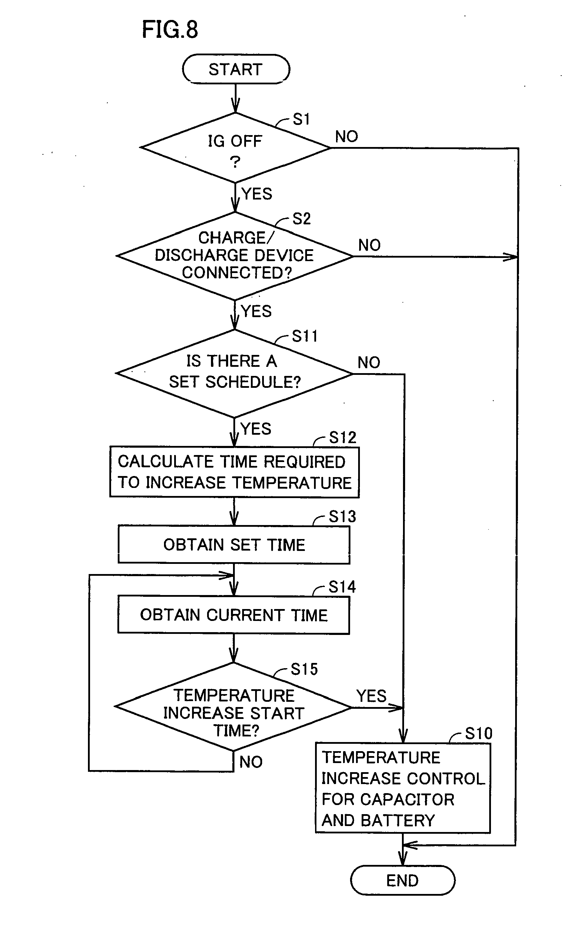

Fig. 8 is a flow chart illustrating temperature increase control performed by control device 30A of Fig. 6.

Referring to Figs. 8 and 5, the processes of steps S1 and S2 shown in Fig. 8 are the same as the processes of steps S1 and S2 shown in Fig. 5, respectively. Therefore, hereinafter, the description of the processes of steps S1 and S2 will not be repeated, and the processes after step S2 will be described.

Referring to Figs. 8 and 6, when charge/discharge device 50 is connected (YES in step S2), the process of step S11 is performed. In step S11, control device 30A determines whether or not there is a set schedule. When control device 30A receives set time ST (YES in step S11), control device 30A calculates a temperature increase time period (step S 12). When it is required to increase the temperature of only one of capacitor C1 and battery B, control device 30A calculates only the temperature increase time period for the power storage device having a temperature to be increased. When it is required to increase both the temperatures of capacitor C1 and battery B, control device 30A calculates the temperature increase time period for capacitor C1 and the temperature increase time period for battery B, and sums these temperature increase time periods.

When there is no set schedule (NO in step S11), control device 30A immediately performs the temperature increase control process for capacitor C1 and battery B (step S10). In step S10, the process identical to the processes of steps S3 to S8 in Fig. 5 is performed (see the processes shown within a broken-line frame in Fig. 5).

Subsequent to the process of step S12, the process of step S 13 is performed. In step S 13, control device 30A calculates the temperature increase start time based on input set time ST and the temperature increase time period calculated in step S12. Next, control device 30A obtains current time CT (step S 14). Then, control device 30A determines whether or not current time CT reaches the temperature increase start time (step S 15).

When current time CT reaches the temperature increase start time (YES in step S 15), control device 30A performs the temperature increase control process for capacitor C1 and/or battery B (step S10). On the other hand, when current time CT does not reach the temperature increase start time (NO in step S 15), the process of step S 14 is performed again. When the process of step S10 is performed, the entire process is finished.

As described above, according to the modification, control device 30 calculates the temperature increase time period required to increase the temperature of capacitor C1 (and/or battery B) from a current temperature to a target temperature, based on the state of capacitor C1 (and/or battery B) (step S12). Then, control device 30 calculates the temperature increase start time based on input set time ST and the temperature increase time period (step S13). When current time CT reaches the temperature increase start time, control device 30 starts increasing the temperature of capacitor C1 (and/or battery B) (step S10).

According to the modification, the hybrid vehicle can be started up with the capacitor or the battery warmed up, by the operator setting the time scheduled to start up the hybrid vehicle beforehand. In addition, the temperature increase process is required only once. Therefore, wasteful consumption of electric power from a commercial power supply can be prevented.

It is to be noted that, in the modification, charge/discharge device 50 may be configured to perform only charging of capacitor C1 and battery B. In this case, for example, control device 30 increases the temperature of capacitor C1 (and battery B) by starting charging from charge/discharge device 50 to capacitor C1 (and battery B) at the temperature increase start time.

### [Second Embodiment]

A power supply device of a second embodiment has a configuration similar to the power supply device of the first embodiment. However, a charge/discharge device connected to the power supply device in the second embodiment has a configuration different from that of the first embodiment.

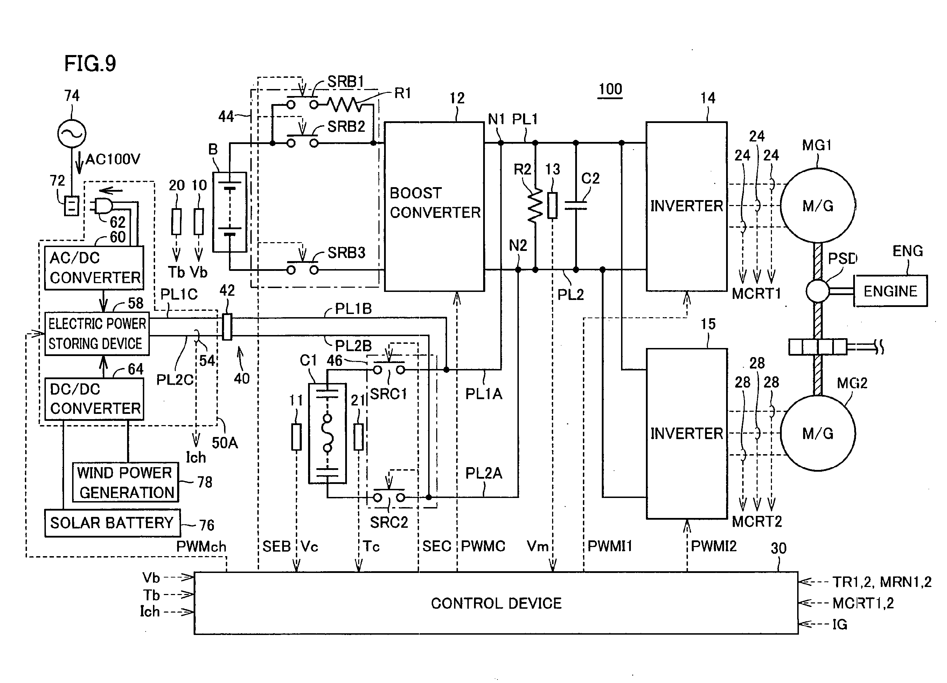

Fig. 9 is a view showing a configuration of a charge/discharge device connected to a power supply device in accordance with a second embodiment of the present invention.

Referring to Figs. 9 and 1, a charge/discharge device 50A is different from charge/discharge device 50 in that charge/discharge device 50A further includes a DC/DC converter 64. A solar battery 76 and/or a wind power generation device 78 as an electric power generation device(s) are/is connected to DC/DC converter 64. The electric power generation device is not particularly limited to solar battery 76 or wind power generation device 78, and various types of electric power generation devices can be used.

DC/DC converter 64 converts a voltage output from solar battery 76 or wind power generation device 78 into a prescribed voltage (voltage V1 shown in Fig. 3). Thereby, electric power obtained by power generation in solar battery 76 or wind power generation device 78 is stored in electric power storing device 58.

It is to be noted that a connection configuration between a power storage unit of the power supply device and the charge/discharge device in accordance with the present embodiment is not limited to the configuration shown in Fig. 1 or the like.

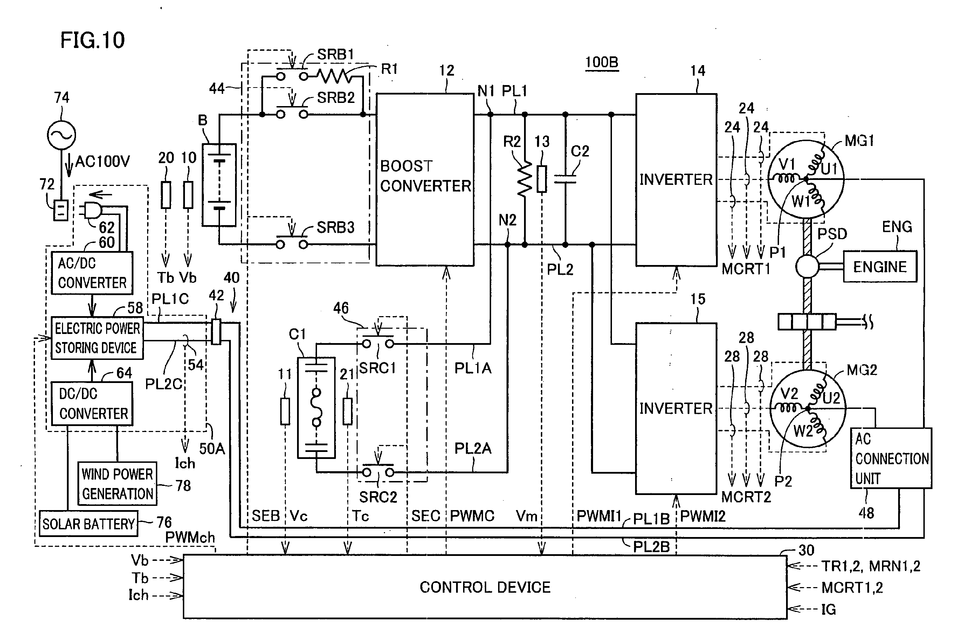

Fig. 10 is a view illustrating another exemplary connection configuration between the power supply device in accordance with the second embodiment and the charge/discharge device.

Referring to Figs. 10 and 1, a hybrid vehicle 100B is different from hybrid vehicle 100 in that hybrid vehicle 100B further includes an AC connection unit 48.

AC connection unit 48 is connected to motor generators MG1 and MG2. Motor generators MG1 and MG2 are, for example, three-phase AC synchronous motors. Motor generator MG1 includes a three-phase coil having a U-phase coil U1, a V-phase coil V1, and a W-phase coil W1, as a stator coil. Motor generator MG2 includes a three-phase coil having a U-phase coil U2, a V-phase coil V2, and a W-phase coil W2, as a stator coil.

AC connection unit 48 is connected to a neutral point P1 of the phase coils of motor generator MG1 and to a neutral point P2 of the phase coils of motor generator MG2. AC connection unit 48 converts DC power received from power supply line PL1B and earth line PL2B into AC power, and supplies the AC power to motor generators MG1 and MG2.

When capacitor C1 is to be charged, control device 30 controls inverters 14 and 15 such that the AC power from AC connection unit 48 is converted into DC power. Similarly, when battery B is to be charged, control device 30 controls inverters 14 and 15 such that the AC power from AC connection unit 48 is converted into DC power.

It is to be noted that the configuration of control device 30 shown in Fig. 10 is the same as the configuration shown in Fig. 2. Referring to Fig. 2, when an AC voltage is input, electric power input/output control unit 34 generates a control signal CTL1 in response, controls inverters 14 and 15 in a coordinated manner, converts the externally supplied AC voltage into a DC voltage and boosts the DC voltage, and causes battery B (or capacitor C1) to be charged.

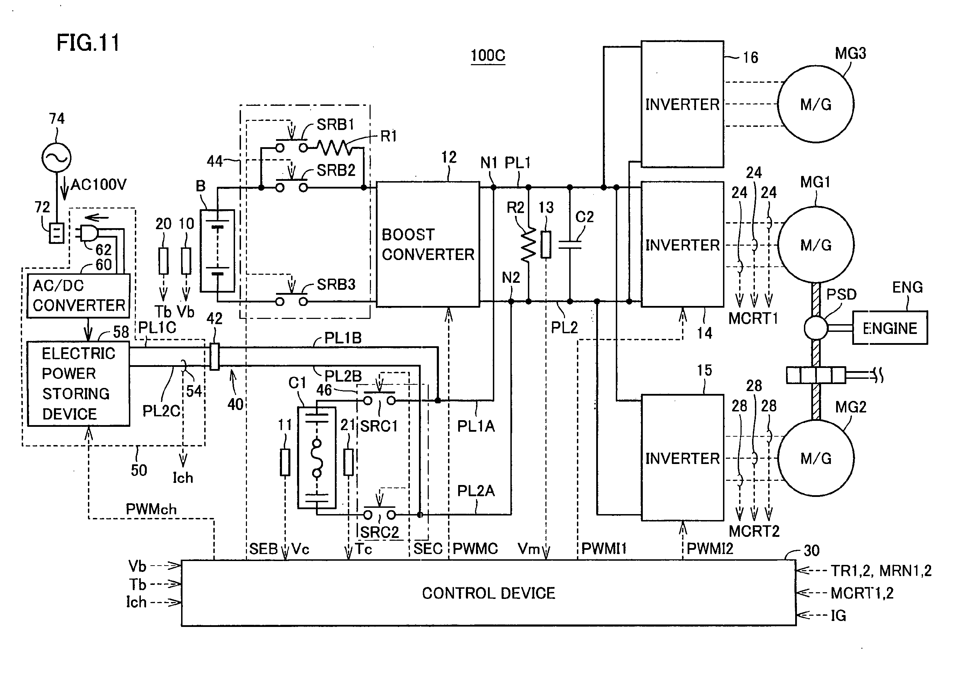

Further, in the present embodiment, the drive force generated by engine ENG is transmitted to the drive shaft driving wheels, and the wheels are, for example, front wheels of the hybrid vehicle. Some of hybrid vehicles are equipped with an electric motor for driving rear wheels additionally provided to the configuration shown in Fig. 1 or the like, as shown in Fig. 11 described below. The present invention is also applicable to such hybrid vehicles.

Fig. 11 is a view showing another exemplary configuration of the hybrid vehicle including the power supply device in accordance with the present embodiment.

Referring to Figs. 11 and 1, a hybrid vehicle 100C is different from hybrid vehicle 100 in that hybrid vehicle 100C further includes an inverter 16 and a motor generator MG3. Inverter 16 is connected between power supply line PL1 and earth line PL2, as with inverters 14 and 15. Motor generator MG3 receives electric power from inverter 16 and rotates rear wheels (not shown) of hybrid vehicle 100. In hybrid vehicle 100C, front wheels are driven by the drive force of engine ENG.

In the embodiments described above, the description has been given of the case where the present invention is applied to a series/parallel type hybrid vehicle capable of splitting motive power of an engine by a power split device and transmitting the split drive forces to an axle and to an electric power generator. However, the present invention is also applicable to a series type hybrid vehicle that uses an engine to drive an electric power generator and generates drive force for an axle only in a motor that uses electric power generated by the electric power generator, and to an electric vehicle driven only by a motor.

It should be understood that the embodiments disclosed herein are illustrative and non-restrictive in every respect. The scope of the present invention is defined by the scope of the claims, rather than the description above, and is intended to include any modifications within the scope and meaning equivalent to the scope of the claims.

## Claims

1. A power supply device mounted to a vehicle, comprising:
a first power storage unit that is chargeable/dischargeable;
an electric power input/output unit for inputting/outputting electric power between said first power storage unit and a charge/discharge device installed external to said vehicle;
a detection unit detecting a temperature of said first power storage unit; and
a temperature increase control unit increasing the temperature of said first power storage unit by performing at least one of charging from said charge/discharge device to said first power storage unit and discharging from said first power storage unit to said charge/discharge device when said temperature increase control unit determines based on a detection result of said detection unit that the temperature of said first power storage unit is required to be increased.

2. The power supply device according to claim 1, wherein
said charge/discharge device includes
a storing unit storing the electric power supplied/received to/from said first power storage unit, and
a voltage conversion unit performing voltage conversion between said storing unit and said electric power input/output unit, and
said temperature increase control unit increases the temperature of said first power storage unit by controlling said voltage conversion unit such that a voltage of said electric power input/output unit is increased and causing a current to flow from said storing unit to said first power storage unit, and by controlling said voltage conversion unit such that the voltage of said electric power input/output unit is decreased and causing a current to flow from said first power storage unit to said storing unit.

3. The power supply device according to claim 2, wherein said charge/discharge device further includes an electric power conversion unit converting AC power from a commercial power supply into DC power and supplying said DC power to said storing unit.

4. The power supply device according to claim 2, wherein said storing unit stores DC power supplied from an electric power generation device.

5. The power supply device according to claim 2, wherein
said vehicle includes
first and second rotating electric machines,
first and second inverters provided corresponding to said first and second rotating electric machines, respectively, and
a DC/AC conversion unit connected to said first and second rotating electric machines for converting DC power received from said electric power input/output unit into AC power and supplying the converted AC power to said first and second rotating electric machines, and
said temperature increase control unit controls said first and second inverters such that the AC power from said DC/AC conversion unit is converted into DC power and supplied to said first power storage unit.

6. The power supply device according to claim 1, further comprising:
a second power storage unit that is chargeable/dischargeable from/to said charge/discharge device via said electric power input/output unit;
a first connection unit connecting said first power storage unit and said electric power input/output unit; and
a second connection unit connecting said second power storage unit and said electric power input/output unit,
wherein said temperature increase control unit selects a power storage unit having a temperature to be increased from said first and second power storage units, and sets one of said first and second connection units that corresponds to said power storage unit having a temperature to be increased in a connected state.

7. The power supply device according to claim 1, wherein said temperature increase control unit calculates a temperature increase start time based on a temperature increase stop time input beforehand and a state of said first power storage unit, and starts increasing the temperature of said first power storage unit when a current time reaches said temperature increase start time.

8. A vehicle, comprising:
a power supply device, said power supply device including:
a first power storage unit that is chargeable/dischargeable;
an electric power input/output unit for inputting/outputting electric power between said first power storage unit and a charge/discharge device installed external to said vehicle;
a detection unit detecting a temperature of said first power storage unit; and
a temperature increase control unit increasing the temperature of said first power storage unit by performing at least one of charging from said charge/discharge device to said first power storage unit and discharging from said first power storage unit to said charge/discharge device when said temperature increase control unit determines based on a detection result of said detection unit that the temperature of said first power storage unit is required to be increased.

9. The vehicle according to claim 8, wherein
said charge/discharge device has
a storing unit storing the electric power supplied/received to/from said first power storage unit, and
a voltage conversion unit performing voltage conversion between said storing unit and said electric power input/output unit, and
said temperature increase control unit increases the temperature of said first power storage unit by controlling said voltage conversion unit such that a voltage of said electric power input/output unit is increased and causing a current to flow from said storing unit to said first power storage unit, and by controlling said voltage conversion unit such that the voltage of said electric power input/output unit is decreased and causing a current to flow from said first power storage unit to said storing unit.

10. The vehicle according to claim 9, wherein said charge/discharge device further has an electric power conversion unit converting AC power from a commercial power supply into DC power and supplying said DC power to said storing unit.

11. The vehicle according to claim 9, wherein said storing unit stores DC power supplied from an electric power generation device.

12. The vehicle according to claim 9, further comprising:
first and second rotating electric machines;
first and second inverters provided corresponding to said first and second rotating electric machines, respectively; and
a DC/AC conversion unit connected to said first and second rotating electric machines for converting DC power received from said electric power input/output unit into AC power and supplying the converted AC power to said first and second rotating electric machines,
wherein said temperature increase control unit controls said first and second inverters such that the AC power from said DC/AC conversion unit is converted into DC power and supplied to said first power storage unit.

13. The vehicle according to claim 8, wherein
said power supply device further includes:
a second power storage unit that is chargeable/dischargeable from/to said charge/discharge device via said electric power input/output unit;
a first connection unit connecting said first power storage unit and said electric power input/output unit; and
a second connection unit connecting said second power storage unit and said electric power input/output unit, and
said temperature increase control unit selects a power storage unit having a temperature to be increased from said first and second power storage units, and sets one of said first and second connection units that corresponds to said power storage unit having a temperature to be increased in a connected state.

14. The vehicle according to claim 8, wherein said temperature increase control unit calculates a temperature increase start time based on a temperature increase stop time input beforehand and a state of said first power storage unit, and starts increasing the temperature of said first power storage unit when a current time reaches said temperature increase start time.
